(19) **Europäisches Patentamt**

**European Patent Office**

**Office européen des brevets**

(11) **EP 1 286 444 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
*H02J 3/38* *(2006.01)*     *H02M 7/48* *(2006.01)*

(21) Anmeldenummer: **02018526.0**

(22) Anmeldetag: **17.08.2002**

(54) **Vorrichtung zum gleichberechtigten Parallelbetrieb von ein- oder dreiphasigen Spannungsquellen**

Device for parallel operation of equal range single-phase or three-phase voltage sources

Dispositif pour l'entrainement en parallèle de sources de tension monophasées ou triphasées ayant le même niveau

(84) Benannte Vertragsstaaten:
**AT BE BG CH CY CZ DE DK EE ES FI FR GB GR IE IT LI LU MC NL PT SE SK TR**

(30) Priorität: **21.08.2001 DE 10140783**

(43) Veröffentlichungstag der Anmeldung:
**26.02.2003 Patentblatt 2003/09**

(73) Patentinhaber: **Institut für Solare Energieversorgungstechnik (ISET) Verein an der Gesamthochschule Kassel e.V.**
**34119 Kassel (DE)**

(72) Erfinder: **Engler, Alfred, Dipl.-Ing.**
**34131 Kassel (DE)**

(74) Vertreter: **Freiherr von Schorlemer, Reinfried**
**Karthäuser Strasse 5A**
**34117 Kassel (DE)**

(56) Entgegenhaltungen:
**US-B1- 6 169 679**

• **JENSEN U B ET AL: "Sharing of nonlinear load in parallel connected threephase converters" CONFERENCE RECORD OF THE 2000 IEEE INDUSTRY APPLICATIONS CONFERENCE. THIRTY-FIFTH IAS ANNUAL MEETING AND WORLD CONFERENCE ON INDUSTRIAL APPLICATIONS OF ELECTRICAL ENERGY, Bd. 4, 8. Oktober 2000 (2000-10-08), Seiten 2338-2344, XP010522583**
• **IRAVANI M R ET AL: "APPLICATIONS OF STATIC PHASE SHIFTERS IN POWER SYSTEMS" IEEE TRANSACTIONS ON POWER DELIVERY, IEEE INC. NEW YORK, US, Bd. 9, Nr. 3, 1. Juli 1994 (1994-07-01), Seiten 1600-1608, XP000484999 ISSN: 0885-8977**
• **TULADHAR A ET AL: "Parallel operation of single phase inverter modules with no control interconnections" APPLIED POWER ELECTRONICS CONFERENCE AND EXPOSITION, 1997. APEC '97 CONFERENCE PROCEEDINGS 1997., TWELFTH ANNUAL ATLANTA, GA, USA 23-27 FEB. 1997, NEW YORK, NY, USA,IEEE, US, 23. Februar 1997 (1997-02-23), Seiten 94-100, XP010215806 ISBN: 0-7803-3704-2**

**Beschreibung**

Die Erfindung betrifft eine Vorrichtung der im Oberbegriff des Anspruchs 1 angegebenen Gattung.

Vorrichtungen zum gleichberechtigten Parallelbetrieb von Wechselspannungsquellen sind vor allem zum Aufbau von modular erweiterbaren, dezentralen elektrischen Versorgungssystemen erwünscht, da sie eine einfache Erhöhung der Systemleistung und Systemsicherheit (n-1 Redundanz) ermöglichen. Unter "Gleichberechtigung" wird dabei verstanden, daß jede Wechselspannungsquelle das Netz mit einer sinusförmigen Spannung von z. B. 230 $V_{eff}$ bei einer Frequenz von z. B. 50 Hz bildet und zur Versorgung beiträgt. Neben der daraus resultierenden Redundanz sollte außerdem eine einfache Installation möglich sein.

Als Wechselspannungsquellen kommen hier insbesondere Wechselrichter in Betracht, die eine geregelte Wechselspannung abgeben bzw. eine vorgegebene Wechselspannung einstellen können (üblicherweise 50 Hz, 230 $V_{eff}$). Dabei kann es sich um ein- oder dreiphasige Wechselrichter handeln, deren Ausgangsspannungen mit einer Irnpulsbreitensteuerung geregelt werden und die ihre Eingangsgleichspannungen z. B. von Solarzellen, Brennstoffzellen, Batterien od. dgl. erhalten. Nachfolgend werden daher alle hier relevanten Wechselspannungsquellen kurz unter der Bezeichnung "Wechselrichter" zusammengefaßt.

Bei bisher für diese Zwecke angewendeten Vorrichtungen ist eine vollständige Gleichberechtigung der Wechselrichter nicht immer vorhanden. Das gilt z. B. für Systeme, die aus einer einzigen Spannungsquelle und mehreren Stromquellen aufgebaut werden. Derartige Systeme benötigen nicht nur zusätzliche Leitungen für den Informationsaustausch, was unerwünscht ist, sondern sind auch nicht redundant, weil sowohl der Ausfall der Spannungsquelle als auch ein fehlerhafter Informationsaustausch zu einer Netzabschaltung führt [1]. Entsprechendes gilt für bekannte Systeme, bei denen zwar das Netz ausschließlich aus als Spannungsquellen betriebenen Wechselrichtern gebildet wird, diese jedoch durch eine Master-Spannungsquelle synchronisiert werden, so daß ein Fehler im Synchronisationssystem zur Netzunterbrechung führen kann [2].

Daneben ist es bekannt, die Frequenz und die Spannung von Wechselrichtern entsprechend ihren Wirk- und Blindleistungen mit Hilfe von Statiken zu verändern, die aus dem Verbundnetz bekannt sind. Hierdurch kann zwar eine volle Gleichberechtigung der Wechselrichter erreicht werden, doch ergeben sich bei ihrer Realisierung andere Probleme [JENSEN U B ET AL: "Sharing of nonlinear load in parallel connected threephase converters" CONFERENCE RECORD OF THE 2000 IEEE INDUSTRY APPLICATIONS CONFERENCE. THIRTY-FIFTH IAS ANNUAL MEETING AND WORLD CONFERENCE ON INDUSTRIAL APPLICATIONS OF ELECTRICAL ENERGY, Bd. 4, 8. Oktober 2000 (2000-10-08), Seiten 2338-2344, XP010522583].

Bekannt ist z. B. der Betrieb von Wechselrichtern mit nicht netzkompatiblen Statiken, was bedeutet, daß infolge einer ohmschen Kopplung der Spannungsquellen die Wirkleistung von der Spannung [P(u)] und die Blindleistung von der Frequenz [Q(f)] abhängt [3]. Nachteilig ist hier die prinzipbedingte Ungenauigkeit der Wirkleistungsaufteilung, die z. B. auch durch die Verbindungsleitungen beeinflußt werden kann.

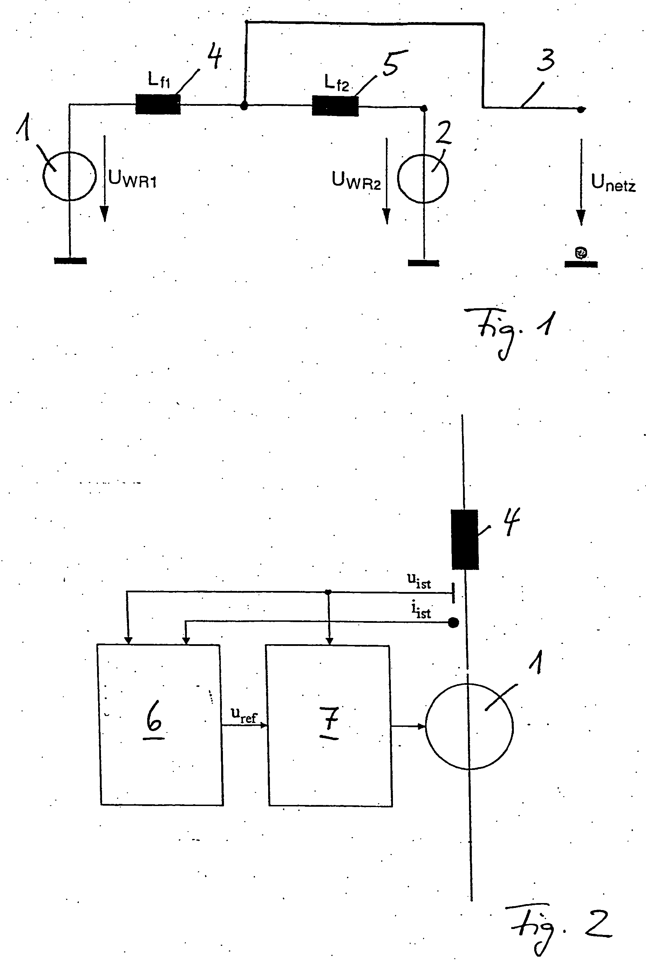

Schließlich sind Vorrichtungen der eingangs bezeichneten Gattung bekannt, die mit netzkompatiblen Statiken arbeiten [4]. Netzkompatibel bedeutet hier, daß gemäß Fig. 1 wenigstens zwei Wechselrichter 1 und 2 wie bei üblichen Verbundnetzen induktiv mit einer Versorgungsleitung 3 gekoppelt sind und daß daher die Wirkleistung von der Phase φ und über diese von der Frequenz [P(f)] und die Blindleistung von der Spannung [Q(u)] abhängt. Als Induktivitäten werden dabei typischerweise sehr kleine Netzkoppelimpedanzen 4 und 5 von z.B. 0,8 mH vorgesehen, die schnell arbeiten und preisgünstig sind.

Wesentlich für den gleichberechtigten Parallelbetrieb der Wechselrichter ist bei derartigen Vorrichtungen zunächst, daß

- alle beteiligten Wechselrichter eine identische Frequenz benötigen,

- nur kleine Spannungsdifferenzen zwischen den Wechselrichtern zugelassen sind, und

- die Phasenunterschiede zwischen den Wechselrichtern sehr klein sein müssen.

Außerdem ist Voraussetzung, daß jeder Wechselrichter eine eigene Spannungs- und Frequenzreferenz benötigt, wenn auf zusätzliche Synchronisations- und/oder Kommunikationsleitungen verzichtet werden soll. Ein Problem besteht jedoch darin, daß bekannte Referenzen (z. B. Quarzoszillatoren) keine für diesen Anwendungsfall vernachlässigbaren Toleranzen aufweisen. Alterungseffekte, Fehler bei der Strom- und Spannungserfassung, Temperaturabhängigkeiten od. dgl. führen zu Ungenauigkeiten mit der Folge, daß die Ausgangsspannung jedes Wechselrichters geregelt werden muß, wozu nur der zeitliche Verlauf seiner Ausgangsspannung $u_{ist}$ und seines Stroms $i_{ist}$ zur Verfügung steht.

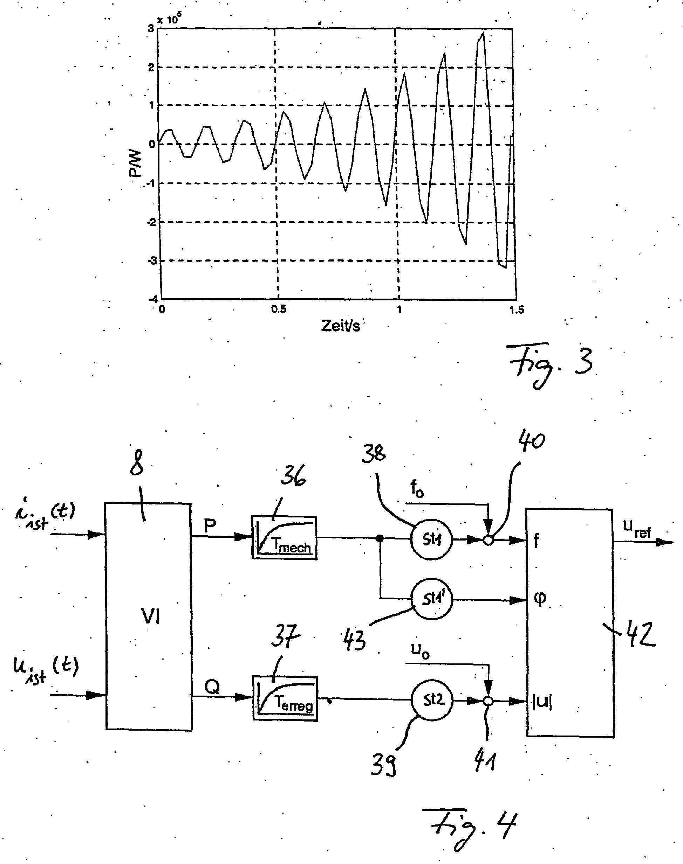

Bei der eingangs bezeichneten, bekannten Vorrichtung [4] erfolgt die Spannungsregelung jedes Wechselrichters 1,2 mit einer Regeleinrichtung nach Fig. 2. Kernstück einer solchen Regeleinrichtung ist eine Einheit 6 mit zwei Eingängen, denen die Istwerte der Spannung $u_{ist}$ bzw. des Stroms $i_{ist}$ des jeweiligen Wechselrichters, hier des Wechselrichters 1, zugeführt werden. Diese Einheit 6 ermittelt unter Anwendung von Frequenz- und Spannungsstatiken eine nach Frequenz und Amplitude bestimmte Referenzspannung $u_{ref}$, die in einem Regelkreis 7 für den Wechselrichter 1 als Führungsgröße bzw. Sollwert dient. Aus dem Vergleich zwischen der Referenzspannung $u_{ref}$ und der jeweiligen Istspannung $u_{ist}$ des Wechselrichters 1 wird ein Signal zur Regelung des betreffenden Wechselrichters 1 abgeleitet, das normalerweise aus einem Stellsignal für dessen Impulsbreite besteht.

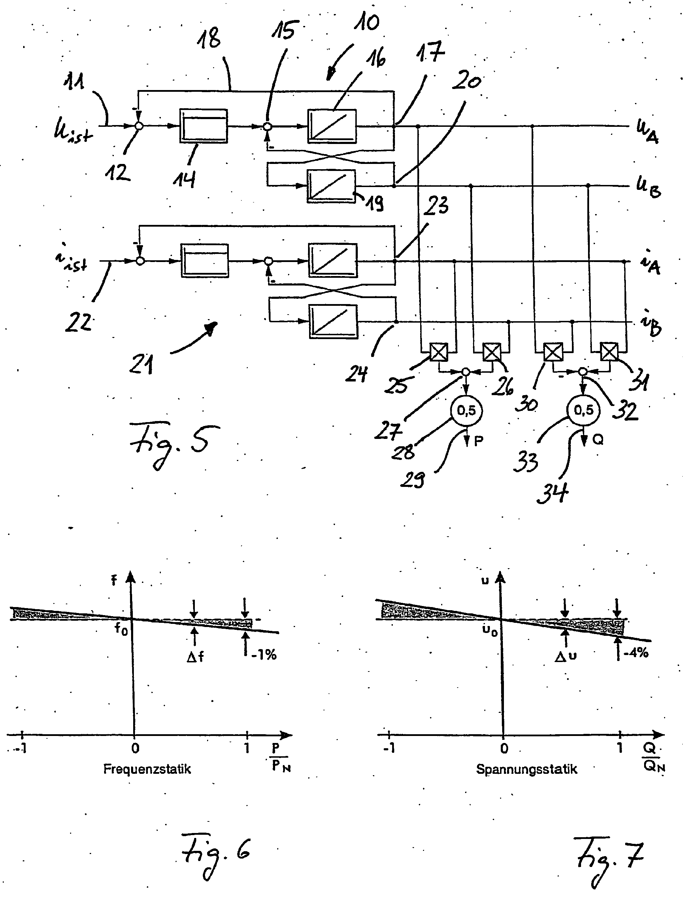

Ein Nachteil der bekannten Vorrichtung besteht darin, daß sie nur mit verhältnismäßig flachen Frequenzstatiken betrieben werden kann, die aufgrund der Toleranzen der verfügbaren Quarze und anderer Bauelemente zu Implementierungsschwierigkeiten führen und daher technisch nicht umgesetzt werden können. Werden dagegen realistische, steilere Statiken verwendet, dann führen diese zu Leistungspendelungen zwischen den parallel geschalteten Wechselrichtern und damit zu Instabilitäten, wie sie in Fig. 3 beispielhaft dargestellt sind. Die Wirkleistungsanteile schwingen zwischen den Wechselrichtern hin und her und schaukeln sich auf, was eine praktische Anwendung unmöglich macht.

Demgegenüber liegt der Erfindung das technische Problem zugrunde, die Vorrichtung der eingangs bezeichneten Gattung so auszubilden, daß vergleichsweise steile Statiken verwendet werden können und dennoch ein Aufschaukeln der Wirkleistungsanteile wirksam vermieden wird.

Zur Lösung dieses Problems dienen die kennzeichnenden Merkmale des Anspruchs 1.

Die Erfindung bringt den überraschenden Vorteil mit sich, daß sich die anhand der Fig. 3 erläuterten Instabilitäten durch die zusätzliche Berücksichtigung der Phase bei der Regelung der Wechselrichter vollständig vermeiden lassen. Wie nachfolgend anhand eines bevorzugten Ausführungsbeispiels näher erläutert wird, werden vielmehr auch bei Anwendung vergleichsweise steiler Frequenz- bzw. Wirkleistungsstatiken bereits nach einem kurzen Einschwingvorgang stationäre Wirkleistungswerte erhalten. Dadurch ergibt sich der wesentliche Vorteil, daß die Wirkleistungsstatiken mehr oder weniger beliebig festgelegt werden können.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:

Fig. 1 die schematische Darstellung einer Vorrichtung mit zwei als Wechselrichtern ausgebildeten Wechselspannungsquellen im Parallelbetrieb;

Fig. 2 ein Blockschaltbild einer Regeleinrichtung für einen der Wechselrichter nach Fig. 1;

Fig. 3 das instabile Verhalten der beiden Wechselrichter nach Fig. 1 bei Anwendung einer bekannten Spannungsregelung;

Fig. 4 das Blockschaltbild eines erfindungsgemäßen Ausführungsbeispiels einer der Erzeugung einer Referenzspannung dienenden Einheit der Regeleinrichtung nach Fig. 2;

Fig. 5 eine bevorzugte Anordnung zur Ermittlung der Wirk- und Blindleistungen in der Einheit nach Fig. 4;

Fig. 6 und 7 den Verlauf je einer in der Einheit nach Fig. 4 verwendeten Frequenz- und Spannungsstatik; und

Fig. 8 das stabile Verhalten der Wechselrichter nach Fig. 1 bei Anwendung der erfindungsgemäßen Einheit nach Fig. 4.

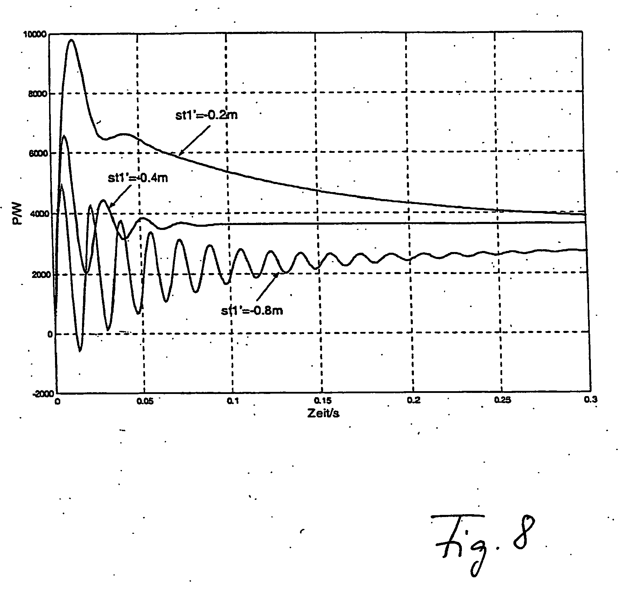

Fig. 4 zeigt die erfindungsgemäße Ausbildung einer zur Erzeugung der Referenzspannung $u_{ref}$ bestimmten Einheit 6 der Regeleinrichtung nach Fig. 2. Die Einheit 6 enthält einen Block 8 mit zwei Eingängen, wobei dem einen Eingang des Signal $u_{ist}$ (t) und dem anderen Eingang das Signal $i_{ist}$ (t) zugeführt wird. Außerdem besitzt der Block 8 zwei Ausgänge, wobei am einen Ausgang das Signal P der Wirkleistung und am anderen Ausgang das Signal Q der Blindleistung erscheint. Im übrigen ist der Block 8 bei einphasigen Systemen vorzugsweise als eine an sich bekannte, schematisch in Fig. 5 dargestellte Anordnung ausgebildet (DE 199 49 997 A1), die zur schnellen und genauen Bestimmung der Werte P und Q mit Hilfe spezieller Filter dient. Die dadurch mögliche hohe Messgeschwindigkeit erlaubt eine schnelle Regelung der Wechselrichter 1 und 2 und vermeidet die Entstehung von Überströmen.

Fig. 5 zeigt schematisch ein für die Zwecke der Erfindung geeignetes spezielles Filter 10 zur Bereitstellung eines Signals, das gegenüber einem ersten, periodischen Eingangssignal im wesentlichen um 90° phasenverschoben ist. Das Filter 10 enthält einen Eingang 11, der über ein erstes Summierglied 12, ein Proportionalglied 14 und ein zweites Summierglied 15 mit dem Eingang eines ersten Integriergliedes 16 verbunden ist. Dessen Ausgang 17 ist über eine Verbindung 18 und das erste Summierglied 12 zum Eingang des Proportionalgliedes 14 zurückgeführt. Außerdem weist das Filter 10 ein zweites Integrierglied 19 auf, das mit dem ersten Integrierglied 16 verbunden ist, wobei die beiden Integrierglieder 16, 19 zwei gekoppelte Integrierstufen bilden. Hierzu führt ein Ausgang 20 des Integriergliedes 19 zum zweiten Summierglied 15, während umgekehrt der Ausgang 17 des ersten Integriergliedes 16 zum Eingang des zweiten Integriergliedes 19 zurückgekoppelt ist. Die beiden Integrierstufen 16, 19 arbeiten mit einer Verstärkung, die der Kreisfreuqenz $\omega_N$ der Grundschwingung des ersten Signals entspricht (z. B. 314 bei 50 Hz).

Infolgedessen ist das Filter 10 so eingerichtet, daß ein sinusförmiges Eingangssignal, z. B. die Spannung $u_{ist}$, am Eingang 11 in Amplitude, Frequenz und Phasenlage im wesentlichen mit einem sinusförmigen Signal $u_A$ am Ausgang 17 des ersten Integriergliedes 16 übereinstimmt, sofern sich das Filter 10 im eingeschwungenen Zustand befindet. Im nicht oder noch nicht eingeschwungenen Zustand entsteht dagegen am ersten Summierglied 12 ein Fehlersignal, das im Proportionalglied 14 mit einem vorgewählten Faktor verstärkt und anschließend über das zweite Summierglied 15 zum Integrierglied 16 geführt wird. Dadurch wird das verstärkte Fehlersignal so lange aufintegriert, bis es aufgrund der Gegenkopplung des Ausgangs 17 zum ersten Summierglied 12 zu Null wird und dadurch das Filter 10 eingeschwungen ist. Ein Signal $u_B$ am Ausgang 20 des zweiten Integrierglieds 19 ergibt sich durch die Integration des Signals $u_A$ am Ausgang 17 des ersten Integrierglieds 16. Da die Integration eines sinusförmigen Signals $u_A$ eine Phasenverschiebung von im wesentlichen 90° verursacht, ist das Signal $u_B$ orthogonal zum Signal $u_A$, d. h. in Amplitude und Frequenz im wesentlichen gleich, aber in der Phase im wesentlichen um 90° verschoben.

Mit dem Verstärkungsfaktor des Proportionalglieds 14 wird eine Dämpfung eingestellt, die sich in der Geschwindigkeit ausdrückt, mit der die Meßergebnisse bestimmt werden. Die Verstärkungsfaktoren der Integrierglieder 16, 19 stellen dabei die Arbeitsfrequenz des Filters 10 ein. Bei Energieversorgungssystemen beträgt diese z. B. 50 Hz. Außerdem werden durch die Filterwirkung des Filters 10 mögliche Störungen unterdrückt, insbesondere solche, die Signale mit einer von der Resonanzfrequenz abweichende Frequenz betreffen.

Gemäß Fig. 5 weist der Block 8 ein zweites, dem Filter 10 entsprechendes Filter 21 mit einem Eingang 22 auf, dem das Signal $i_{ist}$ zugeführt wird, so daß das Filter 21 an Ausgängen 23 und 24 zwei um 90° phasenverschobene Signale $i_A$ und $i_B$ abgibt.

Für die Zwecke der Erfindung wird in komplexer Schreibweise die Wirkleistung durch die Formel

$$P\,(t)\,=\,1/2\,(u_A\,\cdot\,i_A\,+\,u_B\,\cdot\,i_B)$$

und die Blindleistung durch die Formel

$$Q(t)\,=\,1/2\,(u_B\,\cdot\,i_A\,-\,u_A\,\cdot\,i_B)$$

definiert. Für die Zwecke der vorliegenden Erfindung erfolgt die Bestimmung der Werte P und Q daher dadurch, daß den Filtern 10, 21 eine mit den Ausgängen 17, 20 bzw. 23, 24 verbundene Rechenschaltung nachgeschaltet wird. Diese enthält einerseits ein mit den Ausgängen 17, 23 verbundenes Multiplizierglied 25, andererseits ein mit den Ausgängen 20, 24 verbundenes Multiplizierglied 26. Die dadurch erhaltenen Produkte $u_A$ - $i_A$ und $u_B$ - $i_B$ werden in einem nachfolgenden Summierglied 27 addiert, und die erhaltene Summe wird mit einem Proportionalglied 28 mit dem Faktor 0,5 multipliziert. Am Ausgang 29 des Proportionalgliedes 28 erscheint daher entsprechend der obigen Formel die Wirkleistung P. Entsprechend werden die Ausgänge 17, 24 einerseits bzw. 20, 23 andererseits mit je einem Multiplizierglied 30 bzw. 31 verbunden, deren Ausgangsgrößen $u_A \cdot i_B$ bzw. $u_B \cdot i_A$ an einem Summierglied 32 subtrahiert und mit einem nachgeschalteten Proportionalglied 33 mit dem Faktor 0,5 multipliziert werden. Dadurch wird am Ausgang 34 des Proportionalgliedes 33 entsprechend der obigen Formel die Blindleistung Q erhalten.

Demgegenüber stehen bei dreiphasigen Systemen die komplexen Eingangsgrößen u und i zur Verfügung, aus denen direkt die benötigten Leistungen P und Q berechnet werden können. Eine alternative Möglichkeit wäre in diesem Fall auch die dreimalige Anwendung der oben beschriebenen einphasigen Meßanordnung pro Phase und die Bestimmung von P und Q aus den arithmetischen Mittelwerten der jeweiligen Phasenleistungen nach

$$P\,=\,(P_1\,+\,P_2\,+\,P_3)/3$$

und

$$Q\,=\,(Q_1\,+\,Q_2\,+\,Q_3)/3.$$

Die mit der Anordnung nach Fig. 5 erhaltenen P- und Q-Werte werden jeweils einem Entkopplungsnetzwerk 36, 37 zugeführt, das im wesentlichen aus einem Verzögerungsglied erster Ordnung besteht. Diese Entkopplungsnetzwerke 36, 37 werden eingeführt, um die Wirk- und die Blindleistungsregelung bei Stromänderungen, die schneller als eine Netzperiode sind, zu entkoppeln. Auch sind sie notwendig, um die Frequenz und die Spannung bei nichtlinearen Lasten (z. B. Gleichrichter) oder bei Schieflast im dreiphasigen Fall konstant zu halten, da die P- bzw. Q-Bestimmung in diesen Fällen pulsierende Ergebnisse liefert. Die gewählten Bezeichnungen der Verzögerungen sollen die Analogie zu einer Maschine verdeutlichen. Hier haben das Trägheitsmoment ($T_{mech}$) und die Erregungszeitkonstante ($T_{erreg}$) eine ähnliche Glättungswirkung. Die Größe der zu wählenden Verzögerung ist ein Kompromiß zwischen Überlastbarkeit der Stromrichter, die eine unverzögerte Regelung zur Vermeidung hoher Ausgleichsströme erfordert, und gewünschter Glättung bei nichtlinearen Lasten oder Schieflast.

Die auf diese Weise verzögerten P- bzw. Q-Werte werden jeweils einer Multiplizierstufe 38 bzw. 39 zugeführt und in diesen mit den Werten St1 bzw. St2 multipliziert, die den Steigungen von Statiken nach Fig. 6 und 7 entsprechen und daher die Dimensionen Hz/W bzw. 1/A haben. Die Ausgangswerte der Multiplizierstufen 38, 39 werden je einer Addierstufe 40, 41 zugeführt, in denen sie mit vorgegebenen, über je einen zweiten Eingang zugeführten Frequenz- bzw. Spannungswerten addiert werden, die hier z. B. $f_0 = 50$ Hz und $u_0 = 230$ $V_{eff}$ betragen. Dabei stellen die Ausgangswerte der Addierstufe 40 eine Frequenzreferenz und die Ausgangswerte der Addierstufe 41 eine Spannungsreferenz in Form eines absoluten Betrags für die Amplitude dar. Aus beiden Werten wird schließlich in einem Block 42 die auch aus Fig. 2 ersichtliche Referenzspannung $u_{ref}$ abgeleitet.

Die aus Fig. 6 ersichtliche Frequenzstatik gibt den Zusammenhang von f und P an. Entsprechend zeigt Fig. 7 die Spannungsstatik, d. h. die Abhängigkeit der Blindleistung Q von der Spannung u. Im Fall der Fig. 6 und 7 sind dabei anstelle von P und Q längs der Abszissen die auf die Nennleistung $P_N$, $Q_N$ normierten Werte angegeben. Daher bedeutet z. B. in Fig. 6 eine theoretische Änderung der Leistung P von Leerlauf auf Nennleistung eine Änderung der Frequenz um 1 % (0,5 Hz), wobei gleichzeitig ein positives P einer Abgabe von Wirkleistung durch den betreffenden Wechselrichter 1,2 und ein negatives P entsprechend einer Aufnahme von Wirkleistung durch den jeweiligen Wechselrichter 1,2 entspricht. In Fig. 7 bedeutet analog eine theoretische Änderung der Blindleistung Q von 0 auf $Q_N$ eine Änderung der Spannung um 4 %. Somit ergibt sich aus Fig. 6 eine normierte Steigung St1 von -0,01 Hz und in Fig. 7 eine normierte Steigung St2 von -0,04 V.

Die Wirkungsweise der beschriebenen und teilweise bekannten Vorrichtung [4] ist im wesentlichen wie folgt:

Es sei der Einfachheit halber angenommen, daß an der Versorgungsleitung 3 (Fig. 1) keine Last liegt. Wegen der kleinen Netzkopplungsimpedanzen 4,5 haben dann bereits kleinste Unterschiede in den Ausgangsspannungen der Wechselrichter 1 und 2 vergleichsweise große Ströme zwischen diesen zur Folge. Dabei gibt der (schnellere) Wechselrichter mit der größeren Frequenz Wirkleistung ab, und der (langsamere) Wechselrichter mit der kleineren Frequenz nimmt Wirkleistung auf, wie aus der Kraftwerkstechnik allgemein bekannt ist [5]. Die Regelung bewirkt daher nach Fig. 4, daß ein positives P wegen der Multiplikation mit einer negativen Steigung St1 zu einem Wert führt, der vom Wert $f_0$ substrahiert wird, während umgekehrt ein negatives P eine Erhöhung der Frequenz $f_0$ zur Folge hat. Infolgedessen wird der schnellere und Wirkleistung abgebende Wechselrichter langsamer und der langsamere, Wirkleistung aufnehmende Wechselrichter schneller, bis ein exakter Abgleich der Frequenzen vorliegt und praktisch keine Wirkleistung mehr ausgetauscht wird, d. h. der zwischen den Wechselrichtern 1, 2 fließende Strom minimal ist.

Die Blindleistungsregelung erfolgt analog mit dem Unterschied, daß mit Hilfe der Steigung St2 eine Amplitudenreferenz anstatt einer Frequenzreferenz erhalten wird.

Die Erzeugung der Referenzspannung $u_{ref}$ erfolgt im Block 42 nach der Gleichung

$$u_{ref} = |u| \cdot \sin(2\pi ft)$$

bei einphasigen Systemen, wobei $u_{ref}$ eine sinusförmige Funktion der Zeit ist.

Die beschriebene Vorgehensweise funktioniert nur bei flachen, für die Praxis unrealistischen Frequenzstatiken. Bei steileren Frequenzstatiken kommt es dagegen zu den Leistungspendelungen nach Fig. 3. Dabei ist in Fig. 3 eine Frequenzstatik von 1 Hz/$P_N$ angenommen.

Erfindungsgemäß wird zur Vermeidung derartiger Leistungspendelungen vorgesehen, die Einheit 6 gemäß Fig. 4 um einen die Phase $\phi$ berücksichtigenden, negativen Gewichtsfaktor St1' zu ergänzen, der durch die Multiplizierstufe 43 angedeutet ist. Dadurch wird der verzögerte P-Wert der Wirkleistung mit einem Faktor multipliziert, der einen Wert für die Phase $\varphi$ der Referenzspannung $u_{ref}$ liefert. Daher ist $u_{ref}$ jetzt durch f, $|u|$ und $\varphi$ bestimmt, was eine dämpfende Wirkung auf das System hat, die Resonanzfrequenzen günstig beeinflußt und Leistungspendelungen nach Fig. 3 verhindert. Überraschend kann diese Wirkung auch bei Anwendung von vergleichsweise großen Frequenzstatiken erzielt werden, so daß hierdurch die Möglichkeit gegeben ist, die Leistungsregelung anhand von realistischen, in der Praxis ohne weiteres realisierbaren Frequenzstatiken durchzuführen.

Der Faktor St1' führt dazu, daß die Referenzspannung $u_{ref}$ beim einphasigen Fall im Block 42 zur Funktion

$$u_{ref} = |u| \cdot \sin(2\pi ft + \varphi)$$

führt, während im dreiphasigen Fall ein Raumzeiger für die Spannung berechnet werden muß, wobei in Polarkoordinaten $|u|$ als Länge des Raumzeigers erhalten bleibt, während sich der Winkel $\varrho$ des Raumzeigers aus der Gleichung

$$\varrho = \int f dt + \varphi$$

ergibt. Demgemäß hat der Faktor St1' die Dimension rad/w oder grad/w.

Die Spannung $u_{ref}$ wird erfindungsgemäß bei den Wechselrichtern 1,2 mit einer phasen- und amplitudengenauen Regelung eingeregelt, wie dies sowohl für den einphasigen Fall [6] als auch für den dreiphasigen Fall [7] an sich bekannt ist. Da bei induktiv gekoppelten Wechselrichtern die Wirkleistung P durch die Phase $\varphi$ festgelegt ist, hat deren erfindungsgemäß vorgesehene zusätzliche Berücksichtigung bei der Regelung zur Folge, daß sich die Wirkleistung sofort mit der Phase φ ändert, d. h. nicht erst abgewartet werden braucht, bis sich über die Integration eines Frequenzfehlers nach der Gleichung φ = ∫ fdt eine entsprechende Phasenwinkeländerung eingestellt hat, die dann ihrerseits die Wirkleistung einstellt. Die erfindungsgemäße Berücksichtigung der Phase φ bzw. die durch sie erzielte Phasenvorsteuerung wirkt in der Regeleinrichtung schneller und dadurch dämpfend.

Damit sich die gewünschte Dämpfung ergibt, ist der Faktor St1' negativ. Ist daher der Wert P am Ausgang des Blocks 8 positiv, was einem positivem Phasenwinkel entspricht, dann wird über die Multiplizierstufe 43 ein negatives φ erhalten, das über die Phasenvorsteuerung zu einer Reduzierung des Phasenwinkels und damit zu einer Reduzierung der abgegebenen Leistung führt. Da bei allen Wechselrichtern vorzugsweise derselbe Faktor St1' verwendet wird, wirkt sich die Phasenvorsteuerung bei denjenigen Wechselrichtern, die Wirkleistung aufnehmen, in umgekehrter Weise dahingehend aus, daß die Wirkleistungsaufnahme reduziert wird.

Der Faktor St1' wird in Abhängigkeit von den Netzimpedanzen 4,5 und der Steigung St1 der Frequenzstatik z. B. durch eine Optimierungsrechnung bestimmt. Dies ist in Fig. 8 beispielhaft an drei Werten für St1' dargestellt, die - 0,2 m, - 0,4 m und - 0,8 m betragen, während analog zu Fig. 6 wiederum eine Frequenzstatik von 1 % verwendet wird. Außerdem ist zur Vereinfachung der Darstellung angenommen, daß n parallelgeschaltete Wechselrichter mit einer Nennleistung $P_N$ von jeweils 3800 W vorhanden sind, von denen n-1 mit einer Frequenz von 50 Hz und 230 $V_{eff}$ arbeiten, während der n. Wechselrichter mit einer abweichenden Frequenz von $f_0$ = 51 Hz bei ebenfalls 230 $V_{eff}$ arbeitet. Die Steigung der Frequenzstatik (1 %) beträgt im Beispiel somit St1 = - 1/3800 mit der Folge, daß bei P = 3800 W am Ausgang des Blocks 8 wegen $f_0$ - 1 = 50 Hz eine exakte Angleichung der Frequenz an die Frequenz der übrigen n-1 Wechselrichter erhalten wird. Mit anderen Worten müßte der n.Wechselrichter stabil eine Leistung von 3800 W abgeben, um im Vergleich zu den übrigen n-1 Wechselrichtern ein Δf = 0 zu erreichen.

Die Wirkleistungsaufteilung der verschiedenen Wechselrichter ist daher stets so, daß die Frequenzunterschiede verschwinden. Gemäß Fig. 8 wird dies z. B. für St1' = - 0,4 m erreicht. Für diesen Fall wird vergleichsweise schnell, d. h. nach einem vergleichsweise kurzen Einschwingvorgang von ca. 100 ms ein stationärer Zustand entsprechend P = 3800 W erreicht. Wird St1' auf - 0,2 m festgelegt, setzt der stationäre Zustand deutlich später ein. Bei St1' = - 0,8 m müssen analog zu Fig. 3 sogar vergleichsweise starke Wirkleistungspendelungen in Kauf genommen werden, die erst nach ca. 200 ms merklich abklingen. Durch Optimierungsrechnungen bzw. Simulationen kann daher leicht der im Einzelfall zweckmäßige Wert St1' ermittelt werden.

Entsprechend kann bei Wahl einer anderen zweckmäßigen Frequenzstatik vorgegangen werden. Auch bei vergleichsweise steilen Frequenzstatiken ist es jedoch möglich, durch den Phaseneingriff bzw. die Berücksichtigung der Phase φ im Regelkonzept das Pendeln der Wirkleistung zwischen den Wechselrichtern zu verhindern oder zumindest stark zu reduzieren und dadurch einen stationären Wirkleistungswert zu erhalten.

Erst die Einführung der Phasenvorsteuerung ermöglicht somit einen stabilen Betrieb auch bei steilen Frequenzstatiken. Es stellt sich eine stabile Leistung entsprechend der gewählten Frequenzstatik ein. Der zusätzliche Freiheitsgrad der Phasenvorsteuerung ermöglicht bei vorgegebenen Netzkoppelimpedanzen der Wechselrichter und vorgegebenen, evtl. technologisch bedingten Steigungen der Frequenzstatiken das Einstellen eines geeigneten Einschwingverhaltens der Wechselrichter. Bei negativer Frequenzstatik ist St1' in der Regel ebenfalls negativ. Der Gewichtsfaktor St1' muß für eine gegebene Steigung der Frequenzstatik und der Netzkoppelinduktivität geeignet bestimmt werden. Dies kann z. B. durch Auswertung der Wurzelortskurve des Versorgungssystems geschehen. Ein Auslegungskriterium ist der geringste Energiebedarf beim Aufsynchronisieren (z. B. St1' = - 0,4 m in Fig. 8). Auch die Systemeigenfrequenz ändert sich mit der Phasenvorsteuerung und muß gegebenenfalls angepaßt werden, so daß Resonanzen im Gesamtsystem vermieden werden.

Die bisher für einen Fall ohne Last in der Versorgungsleitung 3 (Fig. 1) beschriebenen Verhältnisse ergeben sich analog für den Fall, daß ein Verbraucher an die Versorgungsleitung 3 angeschlossen ist.

Die Erfindung ist nicht auf das beschriebene Ausführungsbeispiel beschränkt, von dem zahlreiche Abwandlungen möglich sind. Insbesondere sind die in Fig. 6 bis 8 angegebenen Größen nur als Beispiele aufzufassen, die in Abhängigkeit vom Einzelfall abgeändert werden können. Abgesehen davon versteht sich, daß die verschiedenen Merkmale auch in anderen, als den dargestellten und beschriebenen Kombinationen angewendet werden können.

Literatur

[1] Heinz van der Broeck, Ulrich Boeke: "A Simple Method for Parallel Operation of Inverters", Philips Research Laboratories Aachen, Weisshausstraße 2, 52066 Aachen, Germany (803-5069-3/98-1998 IEEE)

[2] J. Holtz, W. Lotzkat: "Multi-inverter UPS system with redundant load sharing control", IEEE Transactions on Industrial Electronics, 1990

[3] Wallace et al.: "Methods and Apparatus for Load Sharing between parallel inverters in an AC-power supply", United States Patent 6,118,680

[4] A. Tuladhar, H. Jin, T. Unger, and K. Mauch, "Parallel Operation of Single Phase Inverters with no Control Interconnections," IEEE Applied Power Electronics Conference and Exposition, APEC '97, Vol. 1, pp 94 - 100.

[5] H. Schaefer: "Elektrische Kraftwerkstechnik", Stringer-Verlag Berlin-Heidelberg, 1979

[6] B. Burger: " Transformatorloses Schaltungskonzept für ein dreiphasiges Inselnetz mit Photovoltaik und Batteriespeicher", Dissertation, Karlsruhe 1997

[7] W. Leonhard: "Control of Electrical Drives", Springer-Verlag Berlin-Heidelberg, 2. Auflage, 1996

**Patentansprüche**

1. Vorrichtung zum gleichberechtigten Parallelbetrieb von induktiv gekoppelten Wechselrichtern (1,2), die über Netzkoppelimpedanzen (4,5) an eine gemeinsame Versorgungsleitung (3) angeschlossen sind, wobei jeder Wechselrichter (1,2) mit je einem zur Regelung seiner Ausgangsspannung bestimmten Regelkreis (7) versehen ist, dem als Sollspannung eine Referenzspannung ($u_{ref}$) zugeführt wird, deren Frequenz (f) unter Berücksichtigung einer vorgewählten Frequenzstatik aus der Wirkleistung (P) und deren Amplitude ($|u|$) unter Berücksichtigung einer vorgewählten Spannungsstatik aus der Blindleistung (Q) des betreffenden Wechselrichters (1,2) abgeleitet ist, **dadurch gekennzeichnet, daß** aus der Wirkleistung (P) unter Berücksichtigung eines vorgewählten Faktors (St1') auch ein Wert für die Phase ($\varphi$) der Referenzspannung ($u_{ref}$) abgeleitet wird.

2. Vorrichtung nach Anspruch 1, **dadurch gekennzeichnet, daß** der vorgewählte Faktor (St1') bei allen Wechselrichtern (1,2) derselbe ist.

3. Vorrichtung nach Anspruch 1 oder 2, **dadurch gekennzeichnet, daß** der Faktor (St1') durch eine Optimierungsrechnung erhalten wird.

4. Vorrichtung nach einem der Ansprüche 1 bis 3, **dadurch gekennzeichnet, daß** Istwerte der Wirk- und Blindleistung (P, Q) dadurch gewonnen werden, daß aus ersten Signalen ($u_A$, $i_A$), die den Istwerten ($u_{ist}$, $i_{ist}$) der Spannung und des Stroms des betreffenden Wechselrichters (1,2) entsprechen, durch Integration je ein im wesentliches gleiches, jedoch um 90° phasenverschobenes zweites Signal ($u_B$, $i_B$) ermittelt wird und dabei die einen Signale ($u_A$, $i_A$) als Realteile und die anderen Signale ($u_B$, $i_B$) als Imaginärteile von Raumzeigern der Spannung bzw. des Stroms interpretiert werden.

5. Vorrichtung nach Anspruch 4, **dadurch gekennzeichnet, daß** den Istwerten der Wirk-bzw. Blindleistung (P, Q) entsprechenden Ausgängen je ein Verzögerungsglied erster Ordnung (36, 37) nachgeschaltet ist.

**Claims**

1. Device for equal-rating, parallel operation of inductively coupled current inverters (1, 2) which are connected via network coupling impedances (4, 5) to a common supply line (3), each current inverter (1,2) being provided respectively with a control circuit (7) which is intended for controlling its output voltage and to which a reference voltage ($u_{ref}$) is supplied as target voltage, the frequency (f) of which, taking into account preselected frequency statics, is derived from the active power (P) and the amplitude ($|u|$) of which, taking into account preselected voltage statics, is derived from the reactive power (Q) of the relevant current inverter (1, 2), **characterised in that** also a value for the phase ($\varphi$) of the reference voltage ($u_{ref}$) is derived from the active power (P) taking into account a preselected factor (St1').

2. Device according to claim 1, **characterised in that** the preselected factor (St1') is the same for all of the current inverters (1, 2).

3. Device according to claim 1 or 2, **characterised in that** the factor (St1') is obtained by means of an optimisation calculation.

4. Device according to one of the claims 1 to 3, **characterised in that** actual values of the active and reactive power (P, Q) are obtained in that, from first signals ($u_A$, $i_A$) which correspond to the actual values ($u_{ist}$, $i_{ist}$) of the voltage and of the current of the relevant current inverter (1, 2), a second signal respectively ($u_B$, $i_B$) which is essentially the same but phase-shifted by 90° is determined by integration and the one signals ($u_A$, $i_A$) are interpreted as real parts and the other signals ($u_B$, $i_B$) as imaginary parts of space vectors of the voltage or of the current.

5. Device according to claim 4, **characterised in that** one time-lag device of the first order (36, 37) respectively is connected subsequently to outputs which correspond to the actual values of the active or reactive power (P, Q).

**Revendications**

1. Dispositif pour l'exploitation en parallèle et équivalente d'onduleurs couplés par induction (1,2) qui sont raccordés par l'intermédiaire d'impédances de couplage de réseaux (4, 5) à une ligne d'alimentation commune (3), chaque onduleur (1,2) étant muni respectivement d'un circuit de régulation (7) qui est destiné à la régulation de sa tension de sortie et auquel est amenée en tant que tension de consigne une tension de référence ($u_{ref}$) dont la fréquence (f) est dérivée de la puissance effective (P) en tenant compte d'une statique de fréquence présélectionnée et dont l'amplitude (|u|) est dérivée de la puissance apparente (Q) de l'onduleur correspondant (1,2) en tenant compte d'une statique de tension présélectionnée, **caractérisé en ce qu'**à partir de la puissance effective (P) est aussi dérivée une valeur pour la phase ($\varphi$) de la tension de référence ($u_{ref}$) en tenant compte d'un facteur présélectionné (St1').

2. Dispositif selon la revendication 1, **caractérisé en ce que** le facteur présélectionné (St1') est le même pour tous les onduleurs (1,2).

3. Dispositif selon la revendication 1 ou 2, **caractérisé en ce que** le facteur (St1') est obtenu par un calcul d'optimisation.

4. Dispositif selon l'une quelconque des revendications 1 à 3, **caractérisé en ce que** des valeurs réelles de la puissance effective et de la puissance apparente (P, Q) sont obtenues par le fait qu'à partir de premiers signaux ($u_A$, $i_A$), lesquels correspondent aux valeurs réelles ($u_{ist}$, $i_{ist}$) de la tension et du courant de l'onduleur correspondant (1,2), est déterminé par intégration respectivement un deuxième signal ($u_B$, $i_B$) sensiblement équivalent mais décalé en phase de 90°, alors que les signaux ($u_A$, $i_A$) sont interprétés comme parties réelles et les autres signaux ($u_B$, $i_B$) sont interprétés comme parties imaginaires d'indicateurs spatiaux de la tension ou du courant.

5. Dispositif selon la revendication 4, **caractérisé en ce que** les sorties correspondant aux valeurs réelles de la puissance effective ou de la puissance apparente (P, Q) sont suivies respectivement d'un élément de temporisation de premier ordre (36, 37).

Fig. 1

Fig. 2

Fig. 3

Fig. 4

Fig. 5

Frequenzstatik

Fig. 6

Spannungsstatik

Fig. 7

Fig. 8